# EUROPEAN PATENT APPLICATION

(11) **EP 1 562 352 A1**
(43) Date of publication of application: **10.08.2005**
(21) Application number: 05002037.9
(22) Date of filing: 01.02.2005
(51) Int. Cl.: H04M 1/02

(54) **Mobile phone with buffer**

(30) Priority: 06.02.2004 JP 2004030841
(71) Applicant: NEC CORPORATION, Tokyo (JP)
(72) Inventor: Terada, Shigehiro c/o NEC Saitama, Ltd., Kodama-gun Saitama (JP)
(74) Representative: VOSSIUS & PARTNER

(57) **Abstract**

A mobile phone is equipped with two casings (3,5) coupled to each other by a two-axis (6A,6B) hinge. When the casings are in the folded state, one casing can make a slight rotation around the hinge axis. The casings then come into contact with each other, resulting in a flaw on the casing surface. To prevent the casings from coming into contact with each other, buffer members are arranged on the casing surface (7,8). The buffer members are formed in the casing region in the vicinity of the two-axis hinge and in the casing region on the side opposite thereto.

## Description

The present invention relates to a mobile communication terminal device, in particular, a device in which two casings are foldably connected to each other by means of a hinge.

### 2. Description of the Related Art

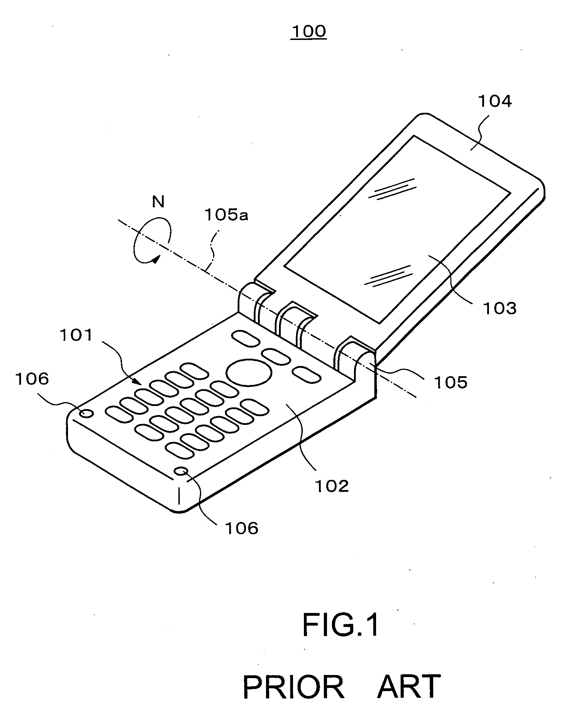

Recently, many mobile phones have a structure in which two casings are connected to each other by a hinge. The two casings rotate around the hinge axis and are thereby folded. Referring to FIG. 1, a mobile phone 100 has a first casing 104 and a second casing 102, which are connected by a hinge 105. The casings rotate around a hinge axis 105a to be thereby folded. The first casing 104 has a display portion 103, and the second casing 102 has a key input portion 101. In the region of the upper surface of the second casing 102 which is on the side opposite to the hinge 105, there are provided two buffer members 106 formed of elastic material. Thus, when the mobile phone 100 is folded, the first and second casings do not directly collide with each other. Thus, it is possible to prevent the surfaces of the casings, in particular, the display portion 103, from being damaged. JP 11-275191 A discloses the above construction.

Apart from this, a mobile phone has come into widespread use in which the first and second casings are connected by a two-axis hinge. The two-axis hinge allows the two casings to make more diversified movements with respect to each other. JP 2003-330590 A discloses a mobile phone having a two-axis hinge. As shown in FIG. 2, a mobile phone 200 has a two-axis hinge 107 with a first axis 107a and a second axis 107b. The hinge 107 connects the first casing 104 and the second casing 102 to each other. The first casing 104 rotates around the hinge axis 107a, and can be folded. Further, the first casing 104 can rotate around the hinge axis 107b. Thus, when the first casing 104 is folded, the display portion 103 can be situated on the outer side of the mobile phone, or conversely, on the inner side of the mobile phone. Also in the mobile phone with the two-axis hinge, the buffer members 106 effectively prevent the first and second casings from colliding with each other.

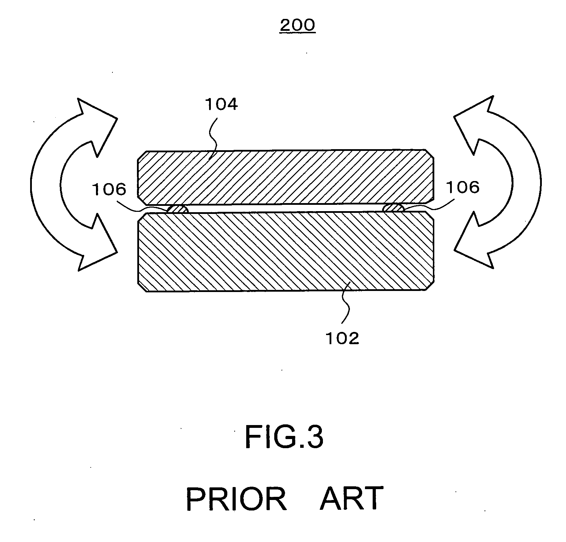

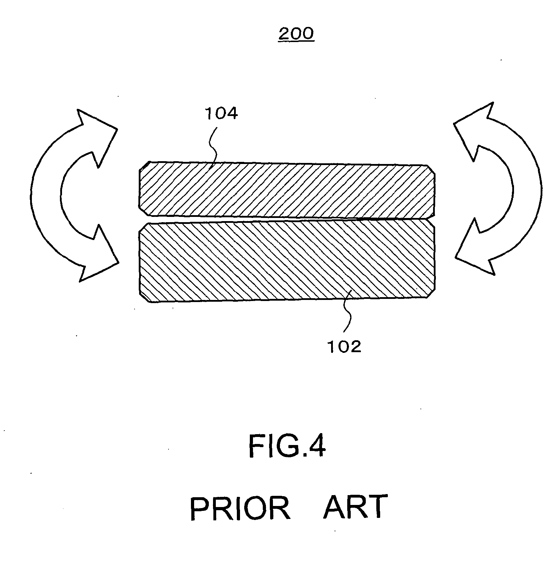

However, the mobile phone with the two-axis hinge involves a problem as described below. FIG. 3 is a sectional view of the mobile phone 200 in the folded state, showing the portion where the buffer members 106 are arranged. In this state, a force causing rotation of the first casing around the hinge axis 107b (in the direction as indicated by the arrow in FIG. 3) may be applied. In such a case, the buffer members 106 can prevent the first and second casings from coming into contact with each other. FIG. 4 is a sectional view of the same mobile phone 200 in the folded state, showing the region in the vicinity of the hinge portion. No buffer members are arranged in this region. Thus, even a slight rotation of the first casing can result its collision with the second casing, thereby damaging the display portion 103.

The present invention has been made with a view toward solving the above problem in the prior art. A mobile communication terminal device according to the present invention includes a first casing and a second casing. The terminal is equipped with a multi-axis hinge portion rotatably connecting the two casings, andbuffermembers adapted to be situatedbetween the two casings when they are folded together. The buffer members are positioned in the region of the casing surface in the vicinity of the multi-axis hinge portion and in the region of the casing surface on the side opposite to the multi-axis hinge portion. In this terminal device, a clearance is secured between the casings when the two casings are folded together, so that there is no fear of the casings coming into contact with each other to damage the display portion, etc.

The above and other objects, features and advantages of the present invention will become apparent from the following detailed description when taken with the accompanying drawings in which:
FIG. 1 is a perspective view of a conventional mobile phone having a one-axis hinge;

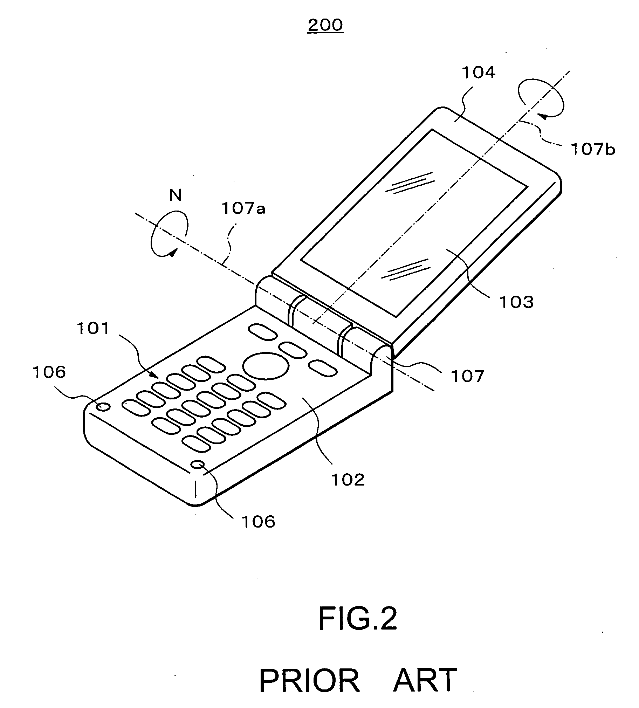

FIG. 2 is a perspective view of a conventional mobile phone having a two-axis hinge;
FIG. 3 is a sectional view of a conventional mobile phone, showing the portion thereof where buffer members are arranged;
FIG. 4 is a sectional view of the conventional mobile phone, showing the portion thereof in the vicinity of the hinge;
FIG. 5 is a perspective view of an example of a mobile phone of the present invention in a state in which two casings are opened;
FIG. 6 is a perspective view of an example of the mobile phone of the present invention in a state in which the casings are folded;
FIG. 7 is a perspective view of an example of the mobile phone of the present invention in a state in which the casings are folded with one casing upside down;
FIG. 8 is a perspective view of another example of the mobile phone of the present invention in a state in which the two casings are opened;
FIG. 9 is a perspective view of still another example of the mobile phone of the present invention in a state in which the two casings are opened;
FIG. 10 is a perspective view of still another example of the mobile phone of the present invention in a state in which the two casings are opened;
FIG. 11 is a perspective view of still another example of the mobile phone of the present invention in a state in which the two casings are opened;
FIG. 12 is a perspective view of still another example of the mobile phone of the present invention in a state in which the two casings are opened;
FIG. 13 is a perspective view of still another example of the mobile phone of the present invention in a state in which the two casings are opened;
FIG. 14 is a perspective view of still another example of the mobile phone of the present invention in a state in which the two casings are opened;
FIG. 15 is a perspective view of still another example of the mobile phone of the present invention in a state in which the two casings are opened; and
FIG. 16 is a perspective view of still another example of the mobile phone of the present invention.

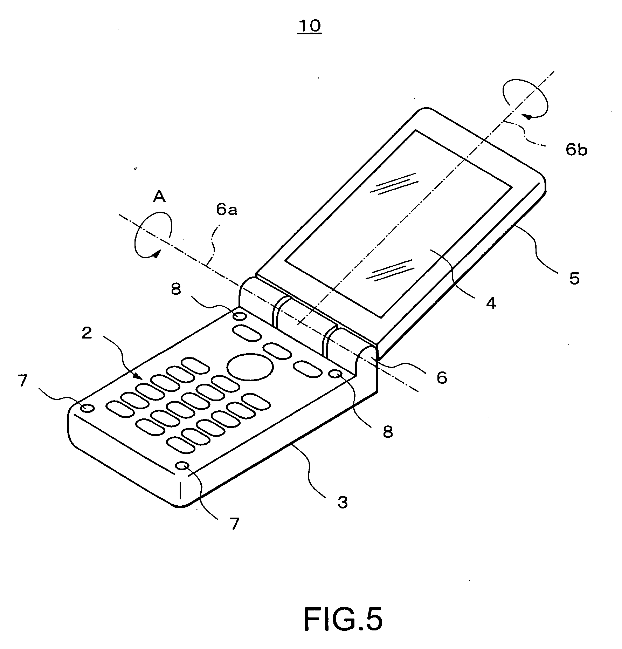

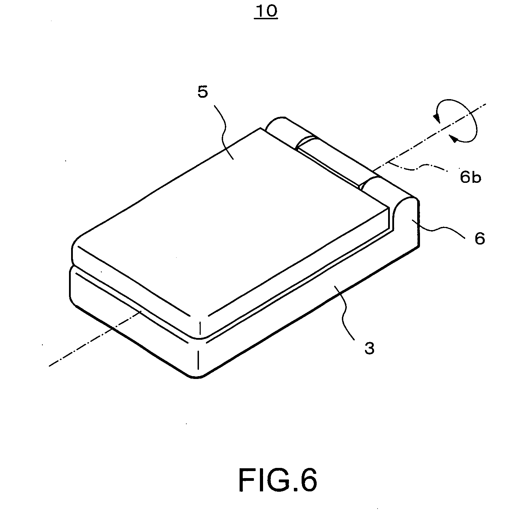

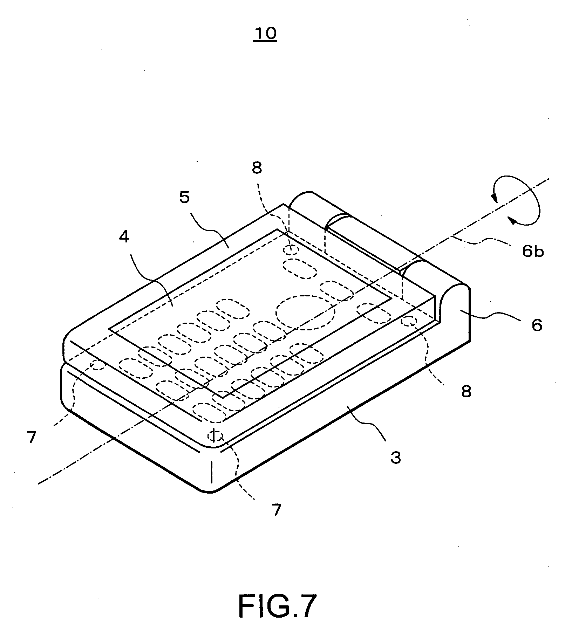

In the following, a mobile phone will be described as an example of a mobile communication terminal device according to the present invention. Referring to FIG. 5, a two-axis hinge 6 couples a first casing 5 and a second casing 3 to each other. The first casing 5 has a display portion 4. The second casing 3 has a key input portion 2. Further, the second casing 3 has buffer members 7 and 8 in the regions in the vicinity of its four corner portions. The buffer members 7 are arranged in the region of the second casing 3 on the side opposite to the two-axis hinge 6. The buffer members 8 are arranged in the region on the surface of the second casing 3 in the vicinity of the two-axis hinge 6. The first and second casings can rotate around a hinge axis 6a to be thereby folded. The first casing 5 can rotate around a hinge axis 6b. Thus, the first and second casings can be folded such that the display portion 4 is situated on the inner side of the mobile phone as shown in FIG. 6, or can be folded such that the display portion 4 is situated on the outer side of the mobile phone as shown in FIG. 7. As shown in FIG. 7, when the mobile phone is folded, the four buffer members 7 and 8 arranged on the second casing secure a clearance between the first and second casings. In particular, in the mobile phone of the present invention, the buffer members 8 are arranged in the region in the vicinity of the two-axis hinge portion 6. A torque around the hinge axis 6b may be applied to the first casing 5 in the folded state. Even in such a case, due to the presence of the buffer members 8, the region of the first casing 5 in the vicinity of the two-axis hinge 6 does not easily rotate. Thus, it is possible to prevent the casings from coming into contact with each other.

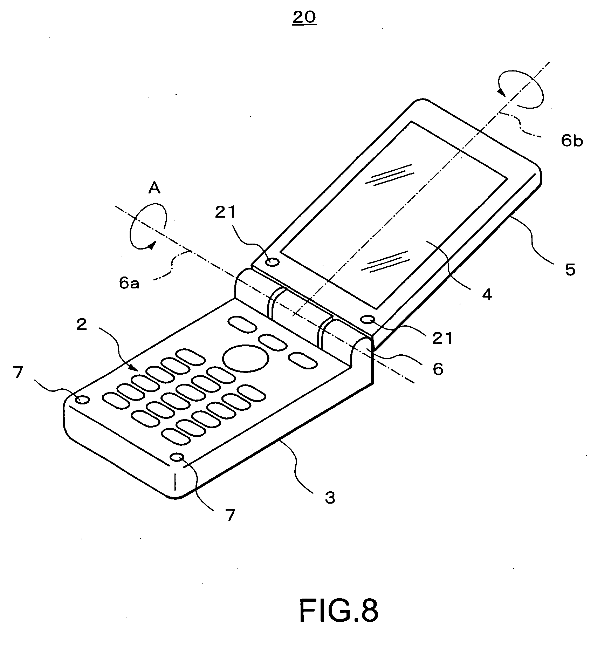

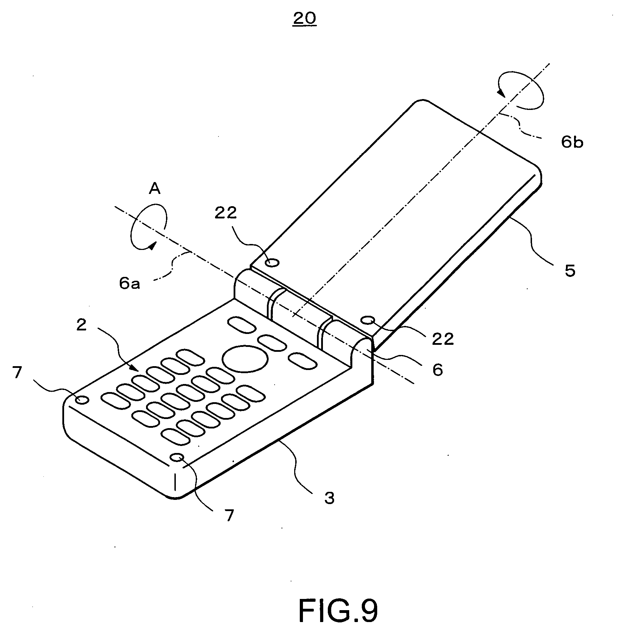

FIG. 8 and FIG. 9 show another example of a mobile phone, indicated generally by reference numeral 20. Also in this example, the two-axis hinge 6 couples the first casing 5 and the second casing 3 to each other. In this example, the buffer members 7 are arranged in the region of the second casing 3 on the side opposite to the two-axis hinge 6. Other buffer members 21, however, are arranged in the region of the first casing 5 in the vicinity of the two-axis hinge 6. Further, as shown in FIG. 9, buffer members 22 are arranged in the region of the other surface of the first casing 5 in the vicinity of the two-axis hinge 6. When the mobile phone 20 is folded, with the display portion 4 being situated on the inner side of the mobile phone 20, the buffer members 7 and 21 prevent the two casings from coming into contact with each other. When the mobile phone 20 is folded, with the display portion 4 being situated on the outer side of the mobile phone 20, the buffer members 7 and 22 prevent the two casings from coming into contact with each other. Due to the buffer members 21 and 22, the region of the first casing 5 in the vicinity of the two-axis hinge 6 does not easily move or rotate.

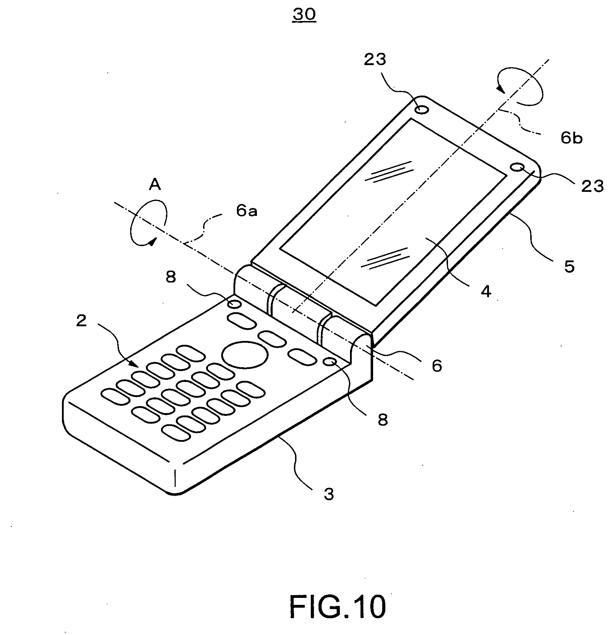

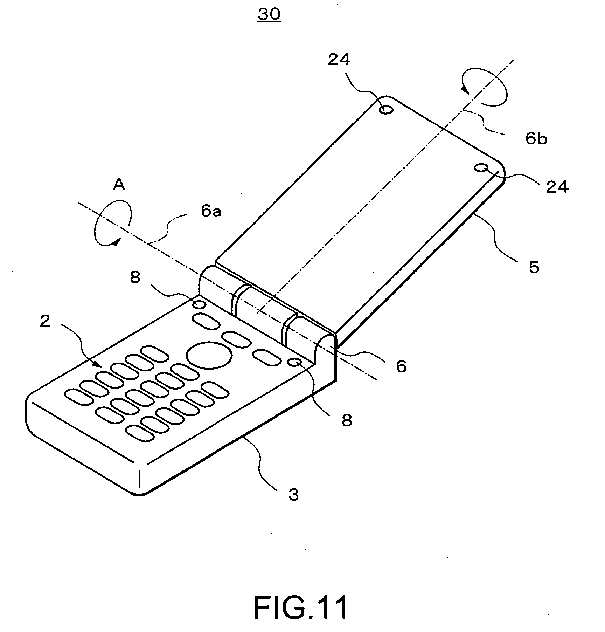

FIG. 10 and FIG. 11 show still another example of a mobile phone, generally indicated by reference numeral 30. In this example, the buffer members 8 are arranged in the region of the second casing 3 in the vicinity of the two-axis hinge 6. At the same time, buffer members 23 are arranged in the region of the first casing 5 on the side opposite to the two-axis hinge 6. As shown in FIG. 11, also on the surface of the first casing 5 reverse to the display portion 4, buffer members 24 are arranged in the region thereof on the side opposite to the two-axis hinge 6. In this example, the positions of the buffer members between the casings when the two casings are folded are the same as those in the example shown in FIGS. 8 and 9. Also in this example, the casings are prevented from coming into contact with each other.

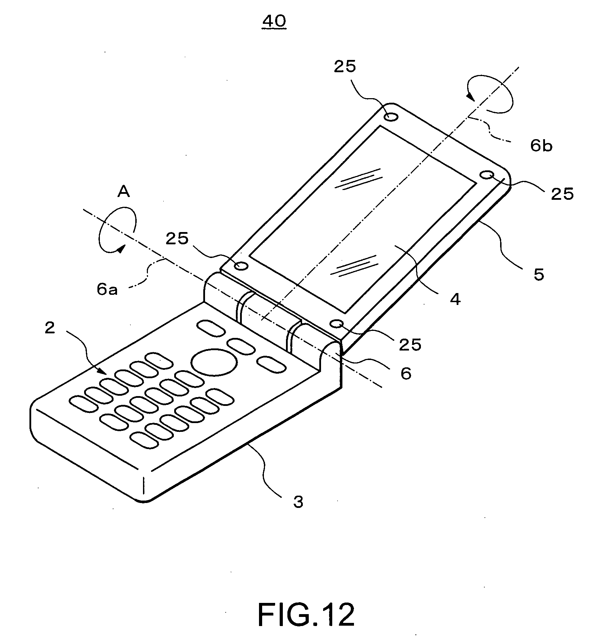

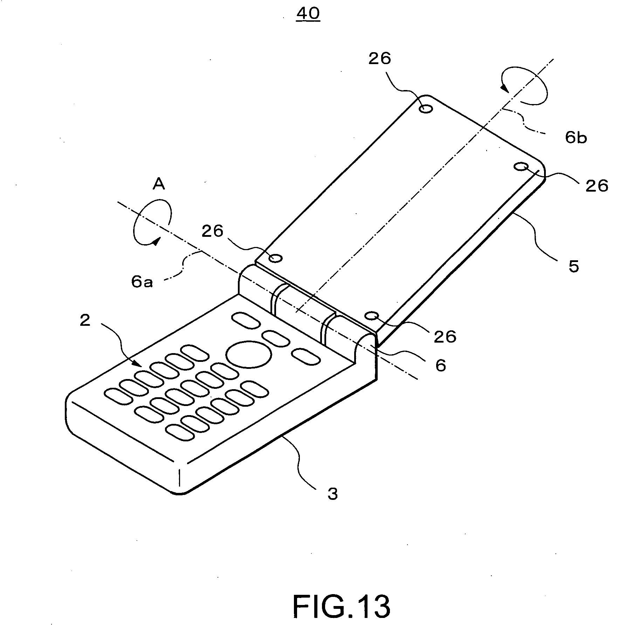

FIG. 12 and FIG. 13 show still another example of a mobile phone, generally indicated by reference numeral 40. In this example, all the buffer members are arranged on the first casing 5. As shown in FIG. 12, buffer members 25 are arranged on the surface of the first casing 5 where the display portion 4 is arranged. The buffer members 25 are arranged in the region in the vicinity of the two-axis hinge 6 and in the region on the side opposite to the two-axis hinge 6. Further, as shown in FIG. 13, buffer members 26 are arranged on the surface reverse to the above-described surface. Like the buffer members 25, the buffer members 26 are arranged in the region in the vicinity of the two-axis hinge 6 and in the region on the side opposite to the two-axis hinge 6. In this example, the positions of the buffer members when the mobile phone is folded are the same as those in the above example. Also in this example, the two casings in the folded state are prevented from coming into contact with each other.

In the above example, it is not absolutely necessary for the buffer members to be arranged symmetrically with respect to the hinge axis 6b. As long as the buffer members can effectively prevent the two casings from coming into contact with each other, it is not necessary for the buffer members to be arranged symmetrically with respect to the hinge axis 6b. In the region of the casing in the vicinity of the two-axis hinge and in the region on the side opposite thereto, three or more buffer members can be arranged, respectively.

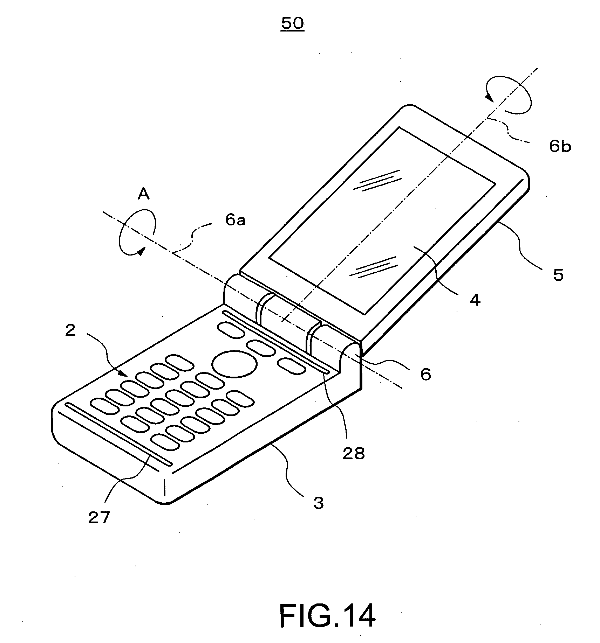

FIG. 14 shows still another example of a mobile phone, generally indicated by reference numeral 50. A buffer member 27 is arranged in the region of the second casing 3 on the side opposite to the two-axis hinge 6. The buffer member 27 is a single continuous member arranged so as to extend from a position in the vicinity of one end portion of the second casing 3 to a position in the vicinity of the other end portion thereof. Further, in the region of the second casing 3 in the vicinity of the two-axis hinge 6, a buffer member 28 is also arranged so as to extend from a position in the vicinity of one end portion of the casing to a position in the vicinity of the other end portion thereof. The buffer members 27 and 28 thus arranged can effectively prevent the two casings 3 and 5 from coming into contact with each other when they are folded. Further, the buffer members 27 and 28 prevent the casings from coming into contact with each other when a torque around the hinge axis 6b is applied.

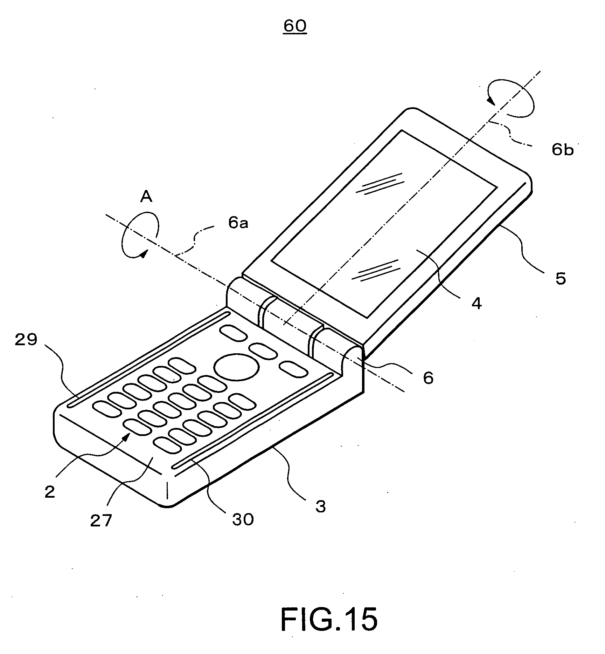

FIG. 15 shows still another example of a mobile phone, generally indicated by reference numeral 60. Buffer members 29 and 30 are respectively arranged in the vicinity of the side surfaces of the second casing 3. As in the above example, each of the buffer members 29 and 30 is a single continuous member arranged so as to extend from the region of the second casing 3 in the vicinity of the two-axis hinge 6 to the region on the side opposite thereto. The buffer members 29 and 30 thus arranged can effectively prevent the two casings 3 and 5 from coming into contact with each other when they are folded. Similarly, the buffer members 29 and 30 prevent the casings from coming into contact with each other when a torque around the hinge axis 6b is applied.

All the buffer members shown in FIG. 14 and FIG. 15 can be arranged on the first casing 5. In this case, the buffer members are arranged on both sides of the first casing 5. It is possible to arrange buffer members as those shown in FIG. 14 on one surface of the first casing, and to arrange buffer members as those shown in FIG. 15 on the other surface thereof. Of the buffer members 27 and 28 shown in FIG. 14, one may be arranged on the first casing, and the other may be arranged on the second casing. In this case, the buffer members arranged on the first casing are arranged on both sides of the first casing. Further, the buffer members can be arranged substantially in the entire region of the surface of the first or second casing in the vicinity of the outer periphery thereof. Accordingly, the buffer member can have a ring-like or a rectangle-like configuration.

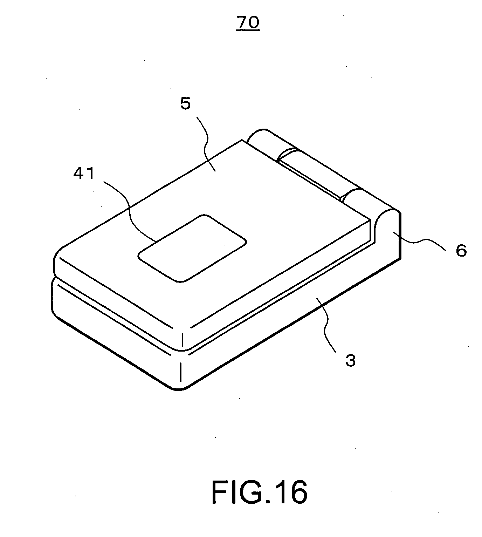

FIG. 16 shows still another example of a mobile phone, generally indicated by reference numeral 70, which has a relatively small display portion 41 on the reverse surface (the surface on the side opposite to the surface where the large display portion 4 is arranged) of the first casing 5. In the state in which the two casings are folded so that the display portion 4 is situated on the inner side, the display portion 41 can be utilized.

Various decorations, such as various patterns, pictures, or relieves, can be formed on the buffer members. The buffer members may be formed of elastic resin or the like. Apart from a mobile phone, the present invention is also applicable to other mobile information terminal devices, such as a personal handy phone system or a personal digital assistant. As the hinge for coupling the two casings, it is possible to use a multi-axis hinge having three or more rotation axes.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

## Claims

1. A mobile communication terminal device equipped with a first casing and a second casing, comprising:
a multi-axis hinge portion rotatably coupling the first and second casings; and
buffer members that are arranged between the first and second casings when the first and second casings are folded,
wherein the buffer members are positioned in a casing region in the vicinity of the multi-axis hinge portion and in a casing region on a side opposite to the multi-axis hinge portion.

2. A mobile communication terminal device according to Claim 1, wherein all the buffer members are arranged on the first casing.

3. A mobile communication terminal device according to Claim 1, wherein all the buffer members are arranged on the second casing.

4. A mobile communication terminal device according to Claim 1, wherein the buffer members are arranged in a region of the first casing in the vicinity of the multi-axis hinge portion and in a region of the second casing on the side opposite to the multi-axis hinge portion.

5. A mobile communication terminal device according to Claim 1, wherein the buffer members are arranged in a region of the second casing in the vicinity of the multi-axis hinge portion and in a region of the first casing on the side opposite to the multi-axis hinge portion.

6. A mobile communication terminal device according to Claim 1, wherein the first casing comprises a display portion,
wherein the second casing comprises a key input portion, and
wherein the buffer members are arranged on two main surfaces of the first casing.

7. A mobile communication terminal device according to Claim 1, wherein the first casing comprises a display portion,
wherein the second casing comprises a key input portion, and
wherein the buffer members are arranged on the surface of the second casing on which the key input portion is arranged.

8. A mobile communication terminal device according to Claim 6, wherein the first casing has a large display portion on one surface thereof and a small display portion on the other surface thereof.

9. A mobile communication terminal device according to Claim 1, wherein, in the casing region, the buffer members are arranged on both sides of a central axis of the casing.

10. A mobile communication terminal device according to Claim 9, wherein the buffer members have a dot-like configuration.

11. A mobile communication terminal device according to Claim 1, wherein, in the casing regions, the buffer members are arranged such that the buffer members extend from a position in the vicinity of one side surface of the casing to a position in the vicinity of the other side surface of the casing.

12. A mobile communication terminal device according to Claim 1, wherein the buffer members are arranged in the vicinity of both side surfaces of the casing and extends from a position in the vicinity of the multi-axis hinge portion to a position on the side opposite thereto, with their end portions being situated in the casing regions.

13. A mobile communication terminal device according to Claim 1, wherein the buffer members are arranged substantially in the entire region in the vicinity of the outer periphery of the second casing.

14. A mobile communication terminal device according to Claim 1, wherein the buffer members are arranged substantially in the entire regions in the vicinity of the outer periphery of two main surfaces of the first casing.

15. A mobile communication terminal device according to any of Claims 1 to 14, wherein the buffer members are elastic members.

16. A mobile communication terminal device according to any of Claims 1 to 15, wherein the mobile communication terminal device is a mobile phone.
